# EUROPÄISCHE PATENTSCHRIFT

(11) **EP 2 651 676 B1**
(45) Veröffentlichungstag und Bekanntmachung des Hinweises auf die Patenterteilung: **24.01.2018**
(21) Anmeldenummer: 11794744.0
(22) Anmeldetag: 12.12.2011
(51) Int. Cl.: B60J 1/02, C03B 35/20, C03B 23/03, B60J 1/00, C03B 23/025, C03B 23/035

(54) **GEBOGENE SCHEIBE**
BENT WINDOWPANE
VITRE CINTRÉE

(30) Priorität: 13.12.2010 EP 10194800
(43) Veröffentlichungstag der Anmeldung: 23.10.2013
(73) Patentinhaber: Saint-Gobain Glass France, 92400 Courbevoie (FR)
(72) Erfinder: DUNKMANN, Benno, B-4000 Liège (BE); LE NY, Jean-Marie, B-4851 Gemmenich (BE); BALDUIN, Michael, 52477 Alsdorf (DE)
(74) Vertreter: Gebauer, Dieter Edmund
(86) Internationale Anmeldenummer: PCT/EP2011/072492
(87) Internationale Veröffentlichungsnummer: WO 2012/080194

(56) Entgegenhaltungen:
- EP-A1- 2 233 444
- WO-A1-2010/136702
- DE-A1-102007 059 323
- US-A- 3 114 571
- US-A- 6 138 477
- US-A1- 2005 142 332
- US-A1- 2007 157 671
- US-A1- 2008 134 721
- US-A1- 2008 134 722

## Beschreibung

Die Erfindung betrifft eine gebogene Scheibe und ein Verfahren zu deren Herstellung.

Die Entwicklung neuer Kraftfahrzeuge wird neben Aspekten zur Ausstattung auch in großen Maßen von Designelementen bestimmt. Die Bedeutung des Windschutzscheibendesigns nimmt dabei aufgrund der großen, gut sichtbaren Fläche immer mehr zu. In dieser Hinsicht spielt nicht nur das Aussehen der Windschutzscheibe eine Rolle, sondern auch Aspekte zum Energiesparen und zur Umweltverträglichkeit. Leistungsfähige Mikroprozessoren sowie CAD (Computer-Aided Design) gestützte Softwarepakete ermöglichen zudem eine weitergehende Anpassung und Optimierung des Luftwiderstandes der Frontscheibe. Moderne Windschutzscheiben in Kraftfahrzeugen weisen aus diesem Grund zunehmend komplexere Formen auf. Insbesondere Fahrzeuge mit sehr niedrigem Spritverbrauch, aber auch Sportwagen stellen hohe Anforderungen an die Geometrie der Scheibe und somit auch an die zur Umsetzung notwendigen Verfahren zum Biegen von Scheiben. Die Biegung einer Glasscheibe lässt sich beispielsweise durch eine Kombination von Schwerkraftbiegung und Pressbiegung realisieren. Eine oder mehrere Glasscheiben werden in einen Biegering eingelegt und erwärmt. In diesem Prozess wird die Glasscheibe entlang der durch den Biegering vorgegebenen Geometrie mithilfe der auf die erwärmte Glasscheibe wirkenden Schwerkraft gebogen. Anschließend wird das erwärmte Glas mit Hilfe von Unterdruck und eines geeigneten Rahmens in die entsprechende Form gebogen.

Komplexere Geometrien lassen sich in der Regel nicht mit einem einzigen Biegeprozess realisieren. Erschwerend kommt hinzu, dass separate oder nachfolgende Biegeverfahren sich nicht beliebig kombinieren lassen. Diese Faktoren schränken die Möglichkeiten, zur angestrebten Scheibengeometrie zu gelangen, deutlich ein. Insbesondere die Kombination von Randbiegung und Flächenbiegung zur Erzeugung komplexer Geometrien lässt sich nur schwer realisieren.

EP 0 677 491 A2 offenbart ein Verfahren zum Biegen und Tempern von Glasscheiben. Die Glasscheiben werden bis auf ihre Erweichungstemperatur erwärmt, in einer Vorrichtung zwischen zwei komplementären Formen gepresst und anschließend in einen Transportring überführt. Die Scheiben werden anschließend im Transportring getempert und gekühlt.

EP 1 371 616 B1 offenbart eine Vorrichtung zum Biegen und Vorspannen von Glasscheiben. Die Vorrichtung umfasst unter anderem aufeinander folgende Formträger, Vorwärmsektionen zum Erhitzen von Glasscheiben auf Biegetemperatur, eine Schwerkraft basierende Vorbiegesektion, eine Biegesektion mit Pressform und eine Abkühlsektion.

EP 1 358 131 B1 offenbart ein Verfahren zum paarweisen Biegen von Glasscheiben. Das Glasscheibenpaar wird hierzu in horizontaler Lage auf einer Rahmenbiegeform durch Schwerkraftbiegen vorgebogen. Anschließend wird das vorgebogene Glasscheibenpaar mit einer vollflächigen Biegeform nachgebogen.

US 2008/0134722 A1 offenbart ein Verfahren und eine Vorrichtung zum Biegen von übereinanderliegenden Scheiben. Die Scheiben werden über eine Saugform angehoben und über eine gegenüberliegende Form gepresst und entsprechend der Geometrie gebogen.

Die internationale Patentanmeldung WO 2010136702 A zeigt eine Fahrzeugverglasunq mit einem mittigen Krümmungsradius von weniger als 3 Meter. Den US-Patenten Nr. 6138477 und Nr. 3114571 kann jeweils eine gebogene Scheibe entnommen werden.

Die Aufgabe der vorliegenden Erfindung liegt darin eine Scheibe bereitzustellen, welche komplexe Flächen- und Randendbiegungen aufweist und sich in einem einzigen Herstellungsprozess realisieren lässt.

Die Aufgabe der Erfindung wird durch eine Vorrichtung nach den Ansprüchen 1 gelöst. Vorteilhafte Ausgestaltungen ergeben sich aus den abhängigen Ansprüchen.

Die erfindungsgemäße Fahrzeugverglasung umfasst mindestens eine Scheibe mit einer vom Fahrzeugboden aus betrachteten Scheibenhöhe von 900 mm bis 1650 mm. Die Scheibe kann sowohl als Einfachverglasung als auch als Verbundverglasung ausgeführt sein. Die Scheibe weißt Kanten im Bereich einer Dachoberkante, einer A-Holmkante und einer Karosseriekante auf. Die Scheibe umfasst zwei gedachte (virtuelle) rechteckige Flächen A und B. Die Fläche A weist eine Ausdehnung von 800 mm * 800 mm auf und die Fläche B weist eine Ausdehnung von 1000 mm * 700 mm auf. Die überlappenden gedachten Flächen A und B werden vom untersten Kontaktpunkt der Scheibe mit der Karosseriekante horizontal zum Boden, mittig begrenzt. Der Ausdruck "horizontal zum Boden, mittig" bezieht sich auf den Zustand der eingebauten Scheibe im Fahrzeug.
Gleichzeitig bilden der unterste Kontaktpunkt und der in kürzesten Abstand zum Kontaktpunkt befindliche Punkt der Dachoberkante eine gedachte (virtuelle) Y0 Achse. Die zwei bezogen auf die Breite der Scheibe am weitesten beanstandeten Punkte bilden eine gedachte (virtuelle) Z0 Achse. Die Komplexität der erfindungsgemäßen Scheibe wird durch die Krümmungsradien der Scheibe innerhalb der Flächen A und B beschrieben. Die Scheibe weist relativ zum Einbauzustand in einer Fahrzeugkaroserie vertikale Krümmungsradien von 18 m bis 2 m und horizontale Krümmungsradien von 10 m bis 1,0 m im Bereich der Fläche A auf. Die Scheibe weist zudem relativ zum Einbauzustand in einer Fahrzeugkaroserie vertikale Krümmungsradien im Bereich von 18 m bis 3 m und horizontale Krümmungsradien von 10 m bis 0,8 m im Bereich der Fläche B auf. Gleichzeitig entspricht die Krümmung der Scheibe entlang der gedachten Y0 - Achse an der Grenze zur Dachoberkante einer ersten Tangente. Diese erste Tangente bildet einen Winkel α (Alfa) von -10° bis +15° zur (Karosserie-) Dachoberfläche. Parallel dazu entspricht die Z0 berührende Krümmung der Scheibe an der Grenze der Scheibe zu der A-Holmkante einer zweiten Tangente. Diese zweite Tangente bildet einen Winkel β (Beta) von 28° bis 70° zu gedachten (virtuellen) Z0 - Achse. Die A-Holmkante bezeichnet die Kante der Scheibe welche dem A-Holm zugewandt ist. Die Dachoberkante bezeichnet die Kante der Scheibe welche dem Dach zugewandt ist.

Die Scheibe weist vertikale Krümmungsradien von 10 m bis 3 m und horizontale Krümmungsradien von 8 m bis 2,0 m im Bereich der Fläche A, sowie vertikale Krümmungsradien im Bereich von 10 m bis 4 m und horizontale Krümmungsradien von 8 m bis 1,0 m im Bereich der Fläche B auf.

Der Winkel α (Alfa) der ersten Tangente zur Dachoberfläche beträgt bevorzugt von -5° bis 10° und/oder der Winkel β (Beta) der zweiten Tangente zu gedachten (virtuellen) Z0 - Achse beträgt bevorzugt von 40° bis 65°.

Die Scheibenhöhe beträgt bevorzugt 1000 mm bis 1250 mm.

In einer alternativen Ausgestaltungsform umfasst die erfindungsgemäße Fahrzeugverglasung umfasst mindestens eine Scheibe mit einer vom Fahrzeugboden aus betrachteten Scheibenhöhe von 1100 mm bis 1850 mm. Die Scheibe kann sowohl als Einfachverglasung als auch als Verbundverglasung ausgeführt sein. Die Scheibe weißt Kanten im Bereich einer Dachoberkante, einer A-Holmkante und einer Karosseriekante auf. Die Scheibe umfasst zwei gedachte (virtuelle) rechteckige Flächen A und B. Die Fläche A weist eine Ausdehnung von 800 mm * 800 mm auf und die Fläche B weist eine Ausdehnung von 1000 mm * 700 mm auf. Die überlappenden gedachten Flächen A und B werden vom untersten Kontaktpunkt der Scheibe mit der Karosseriekante horizontal zum Boden, mittig begrenzt. Der Ausdruck "horizontal zum Boden, mittig" bezieht sich auf den Zustand der eingebauten Scheibe im Fahrzeug. Gleichzeitig bilden der unterste Kontaktpunkt und der in kürzesten Abstand zum Kontaktpunkt befindliche Punkt der Dachoberkante eine gedachte (virtuelle) Y0 Achse. Die zwei bezogen auf die Breite der Scheibe am weitesten beanstandeten Punkte bilden eine gedachte (virtuelle) Z0 Achse. Die Komplexität der erfindungsgemäßen Scheibe wird durch die Krümmungsradien der Scheibe innerhalb der Flächen A und B beschrieben. Die Scheibe weist relativ zum Einbauzustand in einer Fahrzeugkaroserie vertikale Krümmungsradien von 18 m bis 3 m und horizontale Krümmungsradien von 10 m bis 3 m im Bereich der Fläche A auf. Die Scheibe weist zudem relativ zum Einbauzustand in einer Fahrzeugkaroserie vertikale Krümmungsradien im Bereich von 18 m bis 4 m und horizontale Krümmungsradien von 10 m bis 2 m im Bereich der Fläche B auf. Gleichzeitig entspricht die Krümmung der Scheibe entlang der gedachten Y0 - Achse an der Grenze zur Dachoberkante einer ersten Tangente. Diese erste Tangente bildet einen Winkel α (Alfa) von -20° bis +15° zur (Karosserie-) Dachoberfläche. Parallel dazu entspricht die Z0 berührende Krümmung der Scheibe an der A-Holmkante einer zweiten Tangente. Diese zweite Tangente bildet einen Winkel β (Beta) von 3° bis 30° zu gedachten (virtuellen) Z0 - Achse. Die A-Holmkante bezeichnet die Kante der Scheibe welche dem A-Holm zugewandt ist. Die Dachoberkante bezeichnet die Kante der Scheibe welche dem Dach zugewandt ist.

Die Scheibe weist bevorzugt vertikale Krümmungsradien von 15 m bis 4 m und horizontale Krümmungsradien von 8 m bis 4,0 m im Bereich der Fläche A, sowie vertikale Krümmungsradien im Bereich von 15 m bis 5 m und horizontale Krümmungsradien von 8 m bis 3 m im Bereich der Fläche B auf.

Der Winkel α (Alfa) der ersten Tangente zur Dachoberfläche beträgt bevorzugt von -10° bis 5° und/oder der Winkel β (Beta) der zweiten Tangente zu gedachten (virtuellen) Z0 - Achse beträgt bevorzugt von 5° bis 20°.

Die Scheibenhöhe beträgt bevorzugt 1250 mm bis 1650 mm.

In einer weiteren alternativen Ausgestaltungsform umfasst die erfindungsgemäße Fahrzeugverglasung umfasst mindestens eine Scheibe mit einer vom Fahrzeugboden aus betrachteten Scheibenhöhe von 1100 mm bis 1850 mm. Die Scheibe kann sowohl als Einfachverglasung als auch als Verbundverglasung ausgeführt sein. Die Scheibe weißt Kanten im Bereich einer Dachoberkante, einer A-Holmkante und einer Karosseriekante auf. Die Scheibe umfasst zwei gedachte (virtuelle) rechteckige Flächen A und B. Die Fläche A weist eine Ausdehnung von 800 mm * 800 mm auf und die Fläche B weist eine Ausdehnung von 1000 mm * 700 mm auf. Die überlappenden gedachten Flächen A und B werden vom untersten Kontaktpunkt der Scheibe mit der Karosseriekante horizontal zum Boden, mittig begrenzt. Der Ausdruck "horizontal zum Boden, mittig" bezieht sich auf den Zustand der eingebauten Scheibe im Fahrzeug. Gleichzeitig bilden der unterste Kontaktpunkt und der in kürzesten Abstand zum Kontaktpunkt befindliche Punkt der Dachoberkante eine gedachte (virtuelle) Y0 Achse. Die zwei bezogen auf die Breite der Scheibe am weitesten beanstandeten Punkte bilden eine gedachte (virtuelle) Z0 Achse. Die Komplexität der erfindungsgemäßen Scheibe wird durch die Krümmungsradien der Scheibe innerhalb der Flächen A und B beschrieben. Die Scheibe weist relativ zum Einbauzustand in einer Fahrzeugkaroserie vertikale Krümmungsradien von 18 m bis 3 m und horizontale Krümmungsradien von 10 m bis 3 m im Bereich der Fläche A auf. Die Scheibe weist zudem relativ zum Einbauzustand in einer Fahrzeugkaroserie vertikale Krümmungsradien im Bereich von 18 m bis 4 m und horizontale Krümmungsradien von 10 m bis 2 m im Bereich der Fläche B auf. Gleichzeitig entspricht die Krümmung der Scheibe entlang der gedachten Y0 - Achse an der Grenze zur Dachoberkante einer ersten Tangente. Diese erste Tangente bildet einen Winkel α (Alfa) von -20° bis +15° zur (Karosserie-) Dachoberfläche. Parallel dazu entspricht die Z0 berührende Krümmung der Scheibe an der A-Holmkante einer zweiten Tangente. Diese zweite Tangente bildet einen Winkel β (Beta) von 3° bis 30° zu gedachten (virtuellen) Z0 - Achse. Die A-Holmkante bezeichnet die Kante der Scheibe welche dem A-Holm zugewandt ist. Die Dachoberkante bezeichnet die Kante der Scheibe welche dem Dach zugewandt ist.

Die Scheibe weist bevorzugt vertikale Krümmungsradien von 15 m bis 4 m und horizontale Krümmungsradien von 8 m bis 4,0 m im Bereich der Fläche A, sowie vertikale Krümmungsradien im Bereich von 15 m bis 5 m und horizontale Krümmungsradien von 8 m bis 3 m im Bereich der Fläche B auf.

Der Winkel α (Alfa) der ersten Tangente zur Dachoberfläche beträgt bevorzugt von -10° bis 5° und/oder der Winkel β (Beta) der zweiten Tangente zu gedachten (virtuellen) Z0 - Achse beträgt bevorzugt von 5° bis 20°.

Die Scheibenhöhe beträgt bevorzugt 1250 mm bis 1650 mm.

Das Verfahren zum Biegen von Scheiben ermöglicht die Kombination einer Rand- sowie Flächenbiegung. Auf diese Art und Weise ist die Realisierung der Geometrien und Krümmungsradien der erfindungsgemäßen Scheibe und der beiden alternativen Ausgestaltungsformen der erfindungsgemäßen Scheibe möglich. Die endgültige Geometrie ist dabei von der Fahrzeuggeometrie (Karosserie) abhängig und kann in herkömmlicher Weise über CAD Programme vom Fachmann berechnet und simuliert werden. Das Verfahren umfasst einem ersten Schritt, wobei mindestens eine Scheibe, bevorzugt eine erste Scheibe und eine zweite Scheibe, in einen Vorbiegering auf einen fahrbaren Biegeringhalter eingesetzt werden. Das Verfahren eignet sich sowohl für eine Scheibe als auch für das paarweise Biegen von Scheiben. Der Vorbiegering hat bevorzugt eine mittlere Randendbiegung von 5 % bis 50 %. Der fahrbare Biegeringhalter fährt anschließend in einen Ofen und die Scheiben werden im Vorbiegering über eine Heizvorrichtung mindestens auf die Erweichungstemperatur des Glases, bevorzugt 550 °C bis 800 °C erwärmt. Die Erweichungstemperatur richtet sich nach der Zusammensetzung des Glases. Die im Vorbiegering eingelegten Scheiben werden durch Einwirkung der Schwerkraft auf 5 % bis 50 % der lokalen Randendbiegung vorgebogen. Der Ausdruck "Randendbiegung" umfasst im Sinne der Erfindung die mittlere (End-)Biegung im endgültigen, fertigen Zustand von mindestens einem Teilstück des Scheibenrandes oder Biegeringrandes mit einer Ausdehnung oder Länge von mindestens 30 % des gesamten Biegering- oder Scheibenrandes. Die Scheiben werden im nächsten Schritt über eine Ansaugvorrichtung angehoben und über die im Vorbiegering erhaltene Biegung hinaus gebogen. Die Scheiben werden bevorzugt auf 102 % bis 130 % der Randendbiegung gebogen. Die Biegung erfolgt über ein in der Ansaugvorrichtung befindliches Gegenskelett. Das Gegenskelett weist bevorzugt die Form eines Ringes mit einer abstehenden, gebogenen Kontaktfläche auf. Die Ansaugvorrichtung enthält neben dem Gegenskelett eine das Gegenskelett umgebende Abdeckung mit einem Luftleitblech. Das Luftleitbleich befindet sich benachbart zur angehobenen Scheibe und ist so gestaltet, dass die Scheibe während der Biegung an der Kontaktfläche des Gegenskeletts einen Abstand von 3 mm bis 50 mm zu dem Luftleitblech aufweist. Dieser Abstand ermöglicht ein kontinuierliches Ansaugen von Luft im Zwischenraum zwischen der Scheibe und dem Luftleitblech. Die angesaugte Luft erzeugt einen Unterdruck zur Fixierung der Scheibe an der Kontaktfläche. Entsprechend der Biegung (Krümmung) der Kontaktfläche werden die Scheiben durch den Saugvorgang gebogen. Der Kontaktbereich des Formteils, insbesondere die Kontaktfläche mit der Scheibe, ist bevorzugt mit einem flexiblen oder weichen Material ausgekleidet. Dieses Material umfasst bevorzugt feuerfeste Fasern aus Glas, Metall oder Keramik und verhindert Beschädigungen wie Kratzer auf den Scheiben. Eine Beschreibung der Funktionsweise und des Aufbaus der Ansaugvorrichtung zum Anheben der Scheibe findet sich auch in der US 2008/0134722 A1, [0036] und [0038] bis [0040] sowie Anspruch 1 a). Die Scheiben werden anschließend über die Ansaugvorrichtung in einen Endbiegering auf dem fahrbaren Biegeringhalter abgelegt. Der Endbiegering hat bevorzugt mindestens eine 30 % größere mittlere Randendbiegung als der Vorbiegering. Das Ablegen der Scheiben kann beispielsweise durch Aufheben des Saugdruckes über eine Druckabsenkung in der Ansaugvorrichtung erfolgen. Der Vorbiegering und der Endbiegering sind jeweils entsprechend der beabsichtigten Scheibengeometrie gebogen. Der Umfang und der Öffnungswinkel des Biegerings richten sich nach der Geometrie der zu biegenden Scheibe. Der Vorbiegering und der Endbiegering sind bevorzugt auf dem gleichen fahrbaren Biegeringhalter angeordnet und lassen sich beispielsweise durch das Entfernen eines Stiftes oder Halterung vom Vorbiegering in den Endbiegering umstellen. Der Ausdruck "umstellen" umfasst im Sinne der Erfindung sowohl die Änderung der Form (Geometrie) des Biegerings vom Vorbiegering zum Endbiegering, als auch ein Abstreifen des Vorbiegerings sowie "Freiwerden" eines unter dem Vorbiegering angeordneten Endbiegerings. Die auf dem Endbiegering abgelegte Scheibe wird durch Wärmeeinstrahlung in der Fläche vorgebogen. Dazu wird oberhalb der Scheibe ein Temperaturgradient eingestellt und durch die unterschiedliche Erwärmung eine unterschiedliche Flächenbiegung ermöglicht. Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben realisieren. Anschließend werden die Scheiben über eine zweite Ansaugvorrichtung angehoben. Die zweite Ansaugvorrichtung weist bevorzugt denselben Aufbau auf wie die erste Ansaugvorrichtung. Im nächsten Schritt werden die Scheiben gegen eine Gegenform gepresst und bevorzugt in der Fläche der Scheibe gebogen. Der Aufbau dieser Gegenform ist in der US2008/0134722 A1 in [0037] und Figur 2 beschrieben. Die Gegenform fungiert als Negativ der Flächebiegung der Scheibe und biegt die Scheibe in die abschließende Flächenendgeometrie. Anschließend werden die Scheiben auf dem Endbiegering abgelegt und abgekühlt.

Die Scheiben enthalten bevorzugt Glas, besonders bevorzugt Flachglas (Floatglas), Quarzglas, Borosilikatglas und/oder Kalk-Natron-Glas.

Die Scheiben werden bevorzugt über die Ansaugvorrichtung angehoben und auf 100 % bis 130 %, bevorzugt auf 105 % bis 120 % der gemittelten globalen Randendbiegung gebogen. Der Ausdruck "globale Randendbiegung" bezieht sich auf eine prozentual gleichmäßige Biegung der gesamten Scheibe. Die Scheiben werden bevorzugt an einen Biegering (Gegenskelett) in der Ansaugvorrichtung so geformt, dass sie eine Randbiegung aufweisen, die in Form oder Maß über den Betrag der Endrandbiegung hinausgeht.

Die Scheibe wird bevorzugt über die Ansaugvorrichtung mit einer lokal unterschiedlichen Randendbiegung gebogen. Der Ausdruck "lokale Randendbiegung" bezieht sich auf eine prozentual ungleichmäßige (Randend-)Biegung der gesamten Scheibe.

Die Scheibe wird bevorzugt in der ersten und/oder zweiten Ansaugvorrichtung lokal über einen Luftstrom oder einen unteren Biegering gebogen. Der Ausdruck "lokal" meint einzelne Bereiche der Scheibe, denen über einen Luftstrom, bevorzugt aus einer Düse, in einem begrenzten Bereich eine zusätzliche Biegung eingestellt wird. Alternativ kann die beschriebene lokale Biegung auch über einen von unten angelegten Biegering erfolgen.

Die Scheiben werden bevorzugt über einen Temperaturgradienten auf der Glasoberfläche mit maximal 0,05 K/mm bis 0,5 K/mm, bevorzugt 0,1 K/mm bis 0,2 K/mm erwärmt. Die Einstellung des Temperaturgradienten erfolgt bevorzugt über unterschiedlich gesteuerte (d.h. unterschiedliche abgestrahlte Wärmemengen) und über oder unter den Scheiben platzierte Heizvorrichtungen.

Die Scheiben werden bevorzugt auf eine Temperatur von 500 °C bis 750 °C, besonders bevorzugt 580 °C bis 650 °C erwärmt.

Die Scheiben werden bevorzugt durch die Schwerkraft im Vorbiegering auf 10 % bis 30 % der gemittelten Endbiegung vorgebogen.

Die Ansaugvorrichtung baut bevorzugt einen Ansaugdruck von 1 kg/m² bis 100 kg/m² auf. Dieser Ansaugdruck ist ausreichend, um die Scheiben an der Ansaugvorrichtung sicher zu fixieren und über das Gegenskelett zu biegen.

Die Erfindung umfasst des Weiteren die Verwendung der erfindungsgemäßen Scheibe als Fahrzeugwindschutzscheibe.

Die Funktionsbereiche der Flächen A und B dienen in allen Ausgestaltungsformen der Erfindung im Bereich der Transmissionoptik, der Wischbarkeit durch Scheibenwischer und der Eignung als Fläche für Head-Up-Displays (HUD). In den Flächen A und B erlauben die erfindungsgemäßen Krümmungsradien optimale Eigenschaften der genannten Merkmale.

Die erfindungsgemäßen Übergänge in allen Ausgestaltungsformen der Erfindung im Dachbereich erlauben eine Verringerung des Luftwiderstands durch Kantenminimierung. Die erfindungsgemäßen Übergänge im Bereich der A-Holme vermindern die Geräuschentwicklung.

Im Folgenden wird die Erfindung anhand von Zeichnungen und eines Ausführungssowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt eines erfindungsgemäßen Ofens
Figur 2 einen Querschnitt der Ansaugvorrichtung,
Figur 3 ein Fließschema des erfindungsgemäßen Verfahrens,
Figur 4 einen schematischen Aufbau einer erfindungsgemäßen Scheibe,
Figur 5 einen schematischen Aufbau einer erfindungsgemäßen Scheibe mit eingezeichneten A und B Feldern,
Figur 6 den Übergang einer erfindungsgemäßen Scheibe in den Dachbereich und
Figur 7 eine Draufsicht auf die erfindungsgemäße Scheibe.

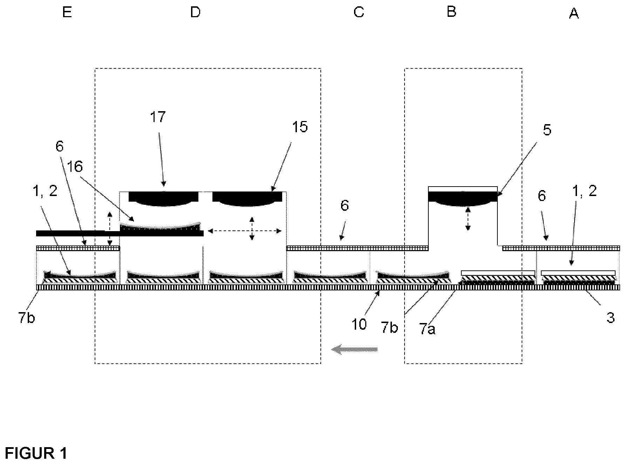

Figur 1 zeigt einen Querschnitt eines erfindungsgemäßen Ofens zur Herstellung einer erfindungsgemäßen Scheibe. Der Ofen umfasst Heizvorrichtungen (6) und innerhalb und außerhalb des Ofens über eine Transportvorrichtung (10) fahrbare Biegeringhalter (3) mit jeweils einem Vorbiegering (7a). Innerhalb eines Vorwärmbereiches (A) werden die Scheiben (1, 2) auf Erweichungstemperatur des jeweiligen Glases erwärmt. Dem Vorwärmbereich (A) schließt sich im Vorbiegebereich (B) eine erste, vertikal höhenverstellbare, bevorzugt konvex gebogene Ansaugvorrichtung (5) an. Die Ansaugvorrichtung (5) ermöglicht eine Aufnahme der Scheiben (1, 2) aus dem Biegering (3), ein Vorbiegen der Scheiben (1, 2) und Ablegen der vorgebogenen Scheiben (1, 2) auf einem Endbiegering (7b). Der Vorbiegering (7a) und der Endbiegering (7b) lassen sich beispielsweise durch das Entfernen eines Stiftes oder einer Halterung vom Vorbiegering (7a) in den Endbiegering (7b) umstellen. An die Ansaugvorrichtung (5) im Vorbiegebereich (B) schließt sich ein Zwischenbereich (C) zum Heizen der auf dem Endbiegering (7b) abgelegten Scheiben (1, 2) an. Benachbart zum Zwischenbereich (C) befinden sich der Endbiegebereich (D) mit einer zweiten vertikal verstellbaren, konvex gebogenen Ansaugvorrichtung (15). Die zweite vertikal verstellbare, konvex gebogene Ansaugvorrichtung (15) ist horizontal beweglich und ermöglicht ein Anheben und Biegen der Scheiben (1, 2). Die zweite vertikal verstellbare, konvex gebogene Ansaugvorrichtung (15) entspricht in ihrem grundsätzlichen Aufbau der Ansaugvorrichtung (5). Der grundsätzliche Aufbau der Ansaugvorrichtung (5, 15) ist auch in der US2008/0134722 A1 beschrieben. Über eine horizontal und vertikal verstellbare konkav gebogene Gegenform (16) lässt sich in den über die konvex gebogene Ansaugvorrichtung (15) aufgenommen Scheiben (1, 2) die entsprechende Endbiegung erzeugen. Die Scheiben (1, 2) werden zwischen der konvex gebogenen Ansaugvorrichtung (15) und der konkav gebogenen Gegenform (16) gepresst. Zur Erhöhung der Taktfrequenz kann neben der konvex gebogenen Ansaugvorrichtung (15) noch eine weitere, dritte Ansaugvorrichtung (17) angebracht sein. Die dritte Ansaugvorrichtung (17) kann Scheiben aufnehmen, während in der zweiten Ansaugvorrichtung Scheiben gebogen werden. Nach Abschluss des Press- oder Biegevorgangs lassen sich die Scheiben (1, 2) über die konvex gebogene Ansaugvorrichtung (9) wieder auf dem Endbiegering (7b) ablegen. Ein Kühlbereich (D) bildet den abschließenden Teil des erfindungsgemäßen Ofens. Der Vorwärmbereich (A), der Vorbiegebereich (B) der Zwischenbereich (C), der Endbiegebereich (D) und der Kühlbereich (D) sind nacheinander verbunden angeordnet.

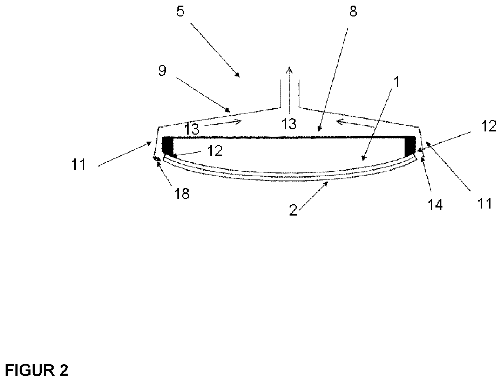

Figur 2 zeigt einen Querschnitt der Ansaugvorrichtung (5). Die Ansaugvorrichtung (5) enthält ein Gegenskelett (8) und eine das Gegenskelett (8) umgebende Abdeckung (9). Das Gegenskelett (8) kann im Bezug auf den nicht gezeigten Endbiegering (7b) global oder lokal überbogen sein. Das Gegenskelett wirkt auch als "Negativform" zum nicht gezeigten Endbiegering (7b). Über die Randzone (14) zwischen Gegenskelett (8) und Abdeckung (9) wird ein Luftstrom (13) in die Ansaugvorrichtung (5) angesaugt. Mit Hilfe des daraus resultierenden Unterdrucks werden die Scheiben (1, 2) angesaugt, angehoben und gebogen. Die Kontaktfläche (12) des Gegenskeletts (8) mit der zweiten Scheibe (2) ist bevorzugt mit einem flexiblen oder weichen Material wie feuerfesten Fasern aus Glas, Metall oder Keramik ausgekleidet.

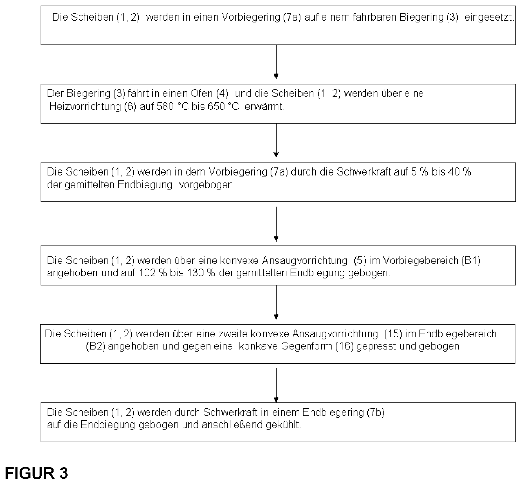

Figur 3 zeigt ein Fließschema des erfindungsgemäßen Verfahrens. Es werden zwei Scheiben (1, 2) in einen Vorbiegering (7a) auf einen fahrbaren Biegering (3) eingesetzt. Der Biegering (3) wird anschließend in einen Ofen gefahren. Die Scheiben (1, 2) werden über eine Heizvorrichtung (6) aus Strahlungsheizkörpern auf die Erweichungstemperatur der Scheiben (1, 2), etwa 580 °C bis 650 °C erwärmt. Im Zuge der Erwärmung der Scheiben (1, 2) werden die im Vorbiegering (7a) befindlichen Scheiben (1, 2) mithilfe der Schwerkraft auf 5 % bis 40 % der gemittelten, zu erreichenden Endbiegung vorgebogen. Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben (1, 2) realisieren. Die unterschiedlichen Temperaturbereiche ermöglichen eine graduelle Erwärmung der Scheibenoberfläche. Die Scheiben (1, 2) werden anschließend über eine bevorzugt konvexe Ansaugvorrichtung (5) angehoben und auf 102 % bis 130 % der gemittelten Endbiegung gebogen. In einem nächsten Schritt werden die Scheiben (1, 2) über die konvexe Ansaugvorrichtung (5) auf dem Endbiegering (7b) auf dem fahrbaren Biegering (3) abgelegt. Der Vorbiegering (7a) und der Endbiegering (7b) sind jeweils entsprechend der beabsichtigten Scheibengeometrie gebogen. Der Vorbiegering (7a) und der Endbiegering (7b) sind bevorzugt auf dem gleichen fahrbaren Biegering (3) angeordnet und lassen sich durch das Entfernen eines Stiftes vom Vorbiegering (7a) in den Endbiegering (7b) umwandeln. Die Scheiben werden im Zwischenbereich (C) geheizt. Die auf dem Endbiegering (7b) abgelegten Scheiben (1, 2) werden durch Wärmeeinstrahlung in der Fläche vorgebogen. Dazu wird oberhalb der Scheiben (1, 2) im Zwischenbereich (C) ein Temperaturgradient eingestellt und durch die unterschiedliche Erwärmung eine unterschiedliche Flächenbiegung ermöglicht. Die Heizvorrichtung (6) umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben (1, 2) realisieren. Anschließend werden die Scheiben im Endbiegebereich (D) über eine zweite Ansaugvorrichtung (15) angehoben und gegen eine bevorzugt konkave Gegenform (16) gepresst und geformt. Die Gegenform weist eine im Vergleich zur zweiten Ansaugvorrichtung (15) "inverse" Geometrie auf. Die Scheiben (1, 2) werden anschließend auf dem Endbiegering (7b) abgelegt und abgekühlt.

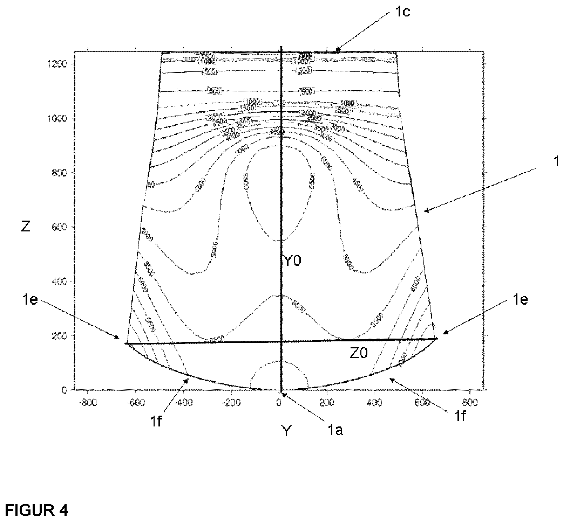

Figur 4 zeigt eine erfindungsgemäße Scheibe (1, 2) in einem gedachten Y, Z Raster. Die auf den Achsen angegebenen Zahlen geben die Längenangaben oder Dimensionen der erfinderischen Scheibe in mm an. Die gedachte (virtuelle) Y0 Achse verläuft entlang der Karosseriekante (1f) vom untersten Kontaktpunkt (1a) der Scheibe (1) im kürzesten Abstand zur Dachoberkante (1c). Die Z0 Achse verläuft zwischen den am weitesten beabstandeten Punkten entlang der Scheibenbreite (Y Achse). Die auf der Scheibe (1) eingezeichneten Linien geben beispielhaft die entsprechenden Krümmungsradien an.

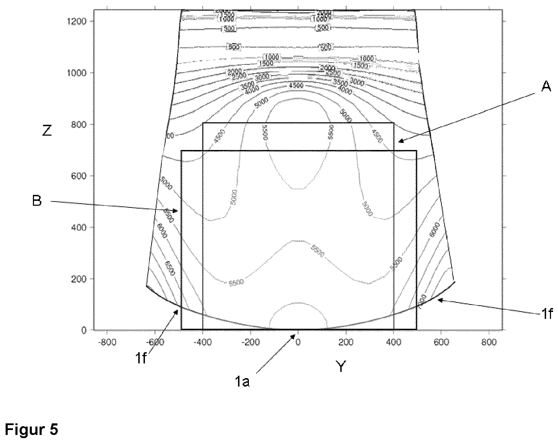

Figur 5 zeigt eine erfindungsgemäße Scheibe in einem gedachten Y, Z Raster. Die zur Karosseriekante (1f) ausgerichteten Kanten der Fläche A und der Fläche B liegen dabei übereinander, mittig im untersten Kontaktpunkt (1a) und parallel zum Boden. Der Ausdruck "Boden" bezieht sich auf die Bodenflächen parallel zu der im Fahrzeug eingebauten erfindungsgemäßen Fahrzeugverglasung. Innerhalb der gedachten Flächen A und B gelten hohe Anforderungen bezüglich der Transmission im Hauptsichtfeld. Auch die Nutzung der Scheibe im Bereich Head-Up-Display ist in den genannten Bereichen der Fläche A und Fläche B möglich.

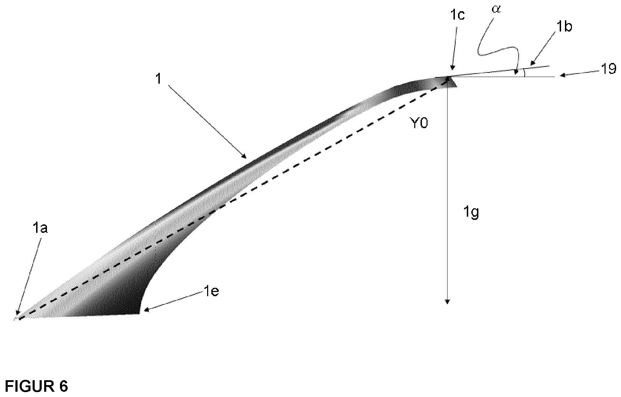

Figur 6 zeigt in der Seitenansicht den Übergang einer erfindungsgemäßen Scheibe (1) in den Dachbereich eines Kraftfahrzeuges. Im Bereich der Dachoberkante (1c) der Scheibe (1) ist die die erste Tangente (1b) als Fortsetzung der Scheibenkrümmung abgebildet. Die erste Tangente (1b) schließt zusammen mit der angedeuteten Dachoberfläche (19) den Winkel α (Alfa) ein. Die gestrichelt eingezeichnete Y0 Achse läuft in kürzester Entfernung von der Dachoberkante (1c) zum untersten Kontaktpunkt (1a). An der Seite geht die Scheibe an den Seitenkanten (1e) in den A-Holm der Karosserie über. Die Höhe (1g) der Scheibe (1) wird in aufgestellter Form bestimmt.

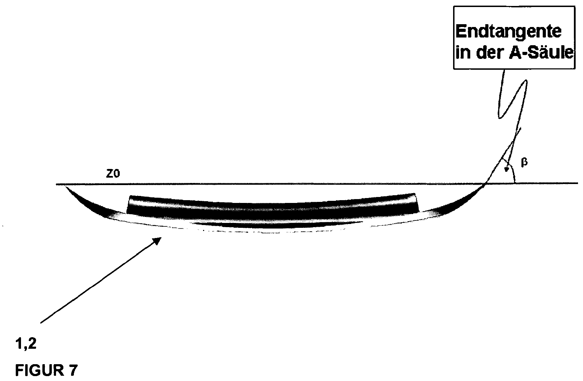

Figur 7 zeigt in einer Draufsicht die erfindungsgemäße Scheibe (1) entlang der Z0 Achse. Die Verlängerung der Z0 Achse bildet zusammen mit der zweiten Tangente (1d) an der Seitenkante (1e) der Scheibe den Winkel β (Beta). Die zweite Tangente bildet die seitliche Fortsetzung der Scheibenkrümmung der erfindungsgemäßen Scheibe (1).

### Bezugszeichenliste

(1) erste Scheibe
(1a) unterster Kontaktpunkt
(1b) erste Tangente
(1c) Dachoberkante / Die dem Dach zugewandte Kante der Scheibe (1)
(1d) zweite Tangente
(1e) Seitenkante
(1f) Karosseriekante / Die der Karosserie zugewandte Kante der Scheibe (1)
(1g) Scheibenhöhe
(2) zweite Scheibe
(3) fahrbarer Biegeringhalter
(4) Ofen
(5) Ansaugvorrichtung
(6) Heizvorrichtung
(7a) Vorbiegering
(7b) Endbiegering
(8) Gegenskelett
(9) Abdeckung
(10) Transportvorrichtung
(11) Luftleitblech
(12) Kontaktfläche
(13) Luftstrom
(14) Randzone
(15) zweite Ansaugvorrichtung
(16) Gegenform
(17) dritte Ansaugvorrichtung
(18) Abstand zwischen Scheibe und Luftleitblech
(19) Dachoberfläche
(A) Vorwärmbereich
(B) Vorbiegebereich
(D) zweiter Biegebereich
(C) Heizbereich
(E) Kühlbereich
(a) Winkel zwischen der am Scheibenende (zum Dach) angelegten Tangente und der Horizontalen eines gedachten Fahrzeugdaches
(β) Winkel zwischen der Z0 Achse und der angelegten Tangente

## Patentansprüche

1. Fahrzeugverglasung umfassend mindestens eine Scheibe (1) mit einer Scheibenhöhe von 900 mm bis 1650 mm, einer Dachoberkante (1c), einer A-Holmkante (1e), einer Karosseriekante (1f) sowie zwei rechteckige Flächen A und B, wobei die Fläche A eine Ausdehnung von 800 mm * 800 mm aufweist und die Fläche B eine Ausdehnung von 1000 mm * 700 mm aufweist und Fläche A und Fläche B vom untersten Kontaktpunkt (1a) der Scheibe (1) mit der Karosseriekante (1f) horizontal zum Boden, mittig begrenzt werden und der unterste Kontaktpunkt (1a) und der in kürzesten Abstand zum Kontaktpunkt (1a) befindliche Punkt der Dachoberkante (1c) eine Y0 Achse bilden und die zwei bezogen auf die Breite der Scheibe (1) am weitesten beanstandeten Punkte eine Z0 Achse bilden, wobei die Scheibe (1)
a. vertikale Krümmungsradien von 10 m bis 3 m und horizontale Krümmungsradien von 8 m bis 2,0 m im Bereich der Fläche A aufweist,
b. vertikale Krümmungsradien im Bereich von 10 m bis 4 m und horizontale Krümmungsradien von 8 m bis 1,0 m im Bereich der Fläche B aufweist,
c. die Krümmung der Scheibe (1) entlang Y0 an der Grenze zur Dachoberkante (1c) einer ersten Tangente (1b) entspricht, wobei die erste Tangente einen Winkel α (Alfa) von -10° bis 15° zur Dachoberfläche (19) bildet,
d. die Z0 berührende Krümmung der Scheibe (1) an der A-Holmkante (1e) einer zweiten Tangente (1d) entspricht, wobei die zweite Tangente einen Winkel β (Beta) von 28° bis 70° zu Z0 bildet.

2. Scheibe nach Anspruch 1, wobei der Winkel α (Alfa) von -5° bis 10° beträgt.

3. Scheibe nach einem der Ansprüche 1 bis 2, wobei der Winkel β (Beta) von 40° bis 65° beträgt.

4. Scheibe nach einem der Ansprüche 1 bis 3, wobei die Scheibenhöhe 1000 mm bis 1250 mm beträgt.

5. Fahrzeugverglasung umfassend mindestens eine Scheibe (1) mit einer Scheibenhöhe von 1100 mm bis 1850 mm, einer Dachoberkante (1c), einer A-Holmkante (1e), einer Karosseriekante (1f) sowie zwei rechteckige Flächen A und B, wobei die Fläche A eine Ausdehnung von 800 mm * 800 mm aufweist und die Fläche B eine Ausdehnung von 1000 mm * 700 mm aufweist und Fläche A und Fläche B vom untersten Kontaktpunkt (1a) der Scheibe (1) mit der Karosseriekante (1f) horizontal zum Boden, mittig begrenzt werden und der unterste Kontaktpunkt (1a) und der in kürzesten Abstand zum Kontaktpunkt (1a) befindliche Punkt der Dachoberkante (1c) eine Y0 Achse bilden und die zwei bezogen auf die Breite der Scheibe (1) am weitesten beanstandeten Punkte eine Z0 Achse bilden, wobei die Scheibe (1)
a. vertikale Krümmungsradien von 18 m bis 3 m und horizontale Krümmungsradien von 10 m bis 3 m im Bereich der Fläche A aufweist,
b. vertikale Krümmungsradien im Bereich von 18 m bis 4 m und horizontale Krümmungsradien von 10 m bis 2 m im Bereich der Fläche B aufweist,
c. die Krümmung der Scheibe (1) entlang Y0 an der Grenze zur Dachoberkante (1c) einer ersten Tangente (1b) entspricht, wobei die erste Tangente einen Winkel α (Alfa) von -20° bis 15° zur Dachoberfläche (19) bildet,
d. die Z0 berührende Krümmung der Scheibe (1) an der A-Holmkante (1e) einer zweiten Tangente (1d) entspricht, wobei die zweite Tangente einen Winkel β (Beta) von 3° bis 30° zu Z0 bildet.

6. Scheibe nach Anspruch 5, wobei die Scheibe (1) vertikale Krümmungsradien von 15 m bis 4 m und horizontale Krümmungsradien von 8 m bis 4 m im Bereich der Fläche A aufweist sowie vertikale Krümmungsradien im Bereich von 15 m bis 5 m und horizontale Krümmungsradien von 8 m bis 3 m im Bereich der Fläche B aufweist.

7. Scheibe nach Anspruch 5 oder 6, wobei der Winkel α (Alfa) von -10° bis 5° beträgt.

8. Scheibe nach einem der Ansprüche 5 bis 7, wobei der Winkel β (Beta) von 5° bis 20° beträgt.

9. Scheibe nach einem der Ansprüche 5 bis 8, wobei die Scheibenhöhe 1250 mm bis 1650 mm beträgt.

10. Fahrzeugverglasung umfassend mindestens eine Scheibe (1) mit einer Scheibenhöhe von 700 mm bis 1100 mm, einer Dachoberkante (1c), einer A-Holmkante (1e), einer Karosseriekante (1f) sowie zwei rechteckige Flächen A und B, wobei die Fläche A eine Ausdehnung von 800 mm * 800 mm aufweist und die Fläche B eine Ausdehnung von 1000 mm * 700 mm aufweist und Fläche A und Fläche B vom untersten Kontaktpunkt (1a) der Scheibe (1) mit der Karosseriekante (1f) horizontal zum Boden, mittig begrenzt werden und der unterste Kontaktpunkt (1a) und der in kürzesten Abstand zum Kontaktpunkt (1a) befindliche Punkt der Dachoberkante (1c) eine Y0 Achse bilden und die zwei bezogen auf die Breite der Scheibe (1) am weitesten beanstandeten Punkte eine Z0 Achse bilden, wobei die Scheibe (1)
a. vertikale Krümmungsradien von 18 m bis 4 m und horizontale Krümmungsradien von 6 m bis 1 m im Bereich der Fläche A aufweist,
b. vertikale Krümmungsradien im Bereich von 18 m bis 5 m und horizontale Krümmungsradien von 6 m bis 0,8 m im Bereich der Fläche B aufweist,
c. die Krümmung der Scheibe (1) entlang Y0 an der Grenze zur Dachoberkante (1c) einer ersten Tangente (1b) entspricht, wobei die erste Tangente einen Winkel α (Alfa) von 15° bis 50° zur Dachoberfläche (19) bildet,
d. die Z0 berührende Krümmung der Scheibe (1) an der A-Holmkante (1e) einer zweiten Tangente (1d) entspricht, wobei die zweite Tangente einen Winkel β (Beta) von 28° bis 90° zu Z0 bildet.

11. Scheibe nach Anspruch 10, wobei die Scheibe (1) vertikale Krümmungsradien von 18 m bis 5 m und horizontale Krümmungsradien von 6 m bis 2 m im Bereich der Fläche A aufweist sowie vertikale Krümmungsradien im Bereich von 18 m bis 6 m und horizontale Krümmungsradien von 6 m bis 1,5 m im Bereich der Fläche B aufweist.

12. Scheibe nach Anspruch 10 oder 11, wobei der Winkel α (Alfa) von 25° bis 45° beträgt.

13. Scheibe nach einem der Ansprüche 10 bis 12, wobei der Winkel β (Beta) von 45° bis 70° beträgt.

14. Scheibe nach einem der Ansprüche 10 bis 13, wobei die Scheibenhöhe 800 mm bis 1000 mm beträgt.

15. Verwendung einer Scheibe nach einem der Ansprüche 1 bis 14 als Fahrzeugwindschutzscheibe, bevorzugt als Fahrzeugwindschutzscheibe mit Head-Up-Display.

## Claims

1. Motor vehicle glazing comprising at least one pane (1) with a pane height of 900 mm to 1650 mm, a roof top edge (1c), an A-pillar edge (1e), a vehicle body edge (1f) as well as two rectangular surfaces A and B, wherein the surface A has dimensions of 800 mm * 800 mm and the surface B has dimensions of 1000 mm * 700 mm and surface A and surface B are centrally delimited by the lowest contact point (1a) of the pane (1) with the vehicle body edge (1f) horizontal to the floor, and the lowest contact point (1a) and the point of the roof top edge (1c) situated the shortest distance from the contact point (1a) form a Y0 axis and the two points farthest apart based on the width of the pane (1) form a Z0 axis, wherein the pane (1)
a. has vertical radii of curvature of 10 m to 3 m and horizontal radii of curvature of 8 m to 2.0 m in the region of the surface A,
b. has vertical radii of curvature in the range from 10 m to 4 m and horizontal radii of curvature of 8 m to 1.0 m in the region of the surface B,
c. the curvature of the pane (1) along Y0 on the boundary with the roof top edge (1c) corresponds to a first tangent (1b), wherein the first tangent forms an angle α (alpha) of -10° to 15° with the roof surface (19),
d. the curvature of the pane (1) touching Z0 at the A-pillar edge (1e) corresponds to a second tangent (1d), wherein the second tangent forms an angle 3 (beta) of 28° to 70° with Z0.

2. Pane according to claim 1, wherein the angle α (alpha) is -5° to 10°.

3. Pane according to one of claims 1 through 2, wherein the angle β (beta) is 40° to 65°.

4. Pane according to one of claims 1 through 3, wherein the pane height is 1000 mm to 1250 mm.

5. Motor vehicle glazing comprising at least one pane (1) with a pane height of 1100 mm to 1850 mm, a roof top edge (1c), an A-pillar edge (1e), a vehicle body edge (1f) as well as two rectangular surfaces A and B, wherein the surface A has dimensions of 800 mm * 800 mm and the surface B has dimensions of 1000 mm * 700 mm, and surface A and surface B are centrally delimited by the lowest contact point (1a) of the pane (1) with the vehicle body edge (1f) horizontal to the floor, and the lowest contact point (1a) and the point of the roof top edge (1c) situated the shortest distance from the contact point (1a) form a Y0 axis, and the two points farthest apart based on the width of the pane (1) form a Z0 axis, wherein the pane (1)
a. has vertical radii of curvature of 18 m to 3 m and horizontal radii of curvature of 10 m to 3 m in the region of the surface A,
b. has vertical radii of curvature in the range from 18 m to 4 m and horizontal radii of curvature of 10 m to 2 m in the region of the surface B,
c. the curvature of the pane (1) along Y0 on the boundary with the roof top edge (1c) corresponds to a first tangent (1b), wherein the first tangent forms an angle α (alpha) of -20° to 15° with the roof surface (19),
d. the curvature of the pane (1) touching Z0 at the A-pillar edge (1e) corresponds to a second tangent (1d), wherein the second tangent forms an angle β (beta) of 3° to 30° with Z0.

6. Pane according to claim 5, wherein the pane (1) has vertical radii of curvature of 15 m to 4 m and horizontal radii of curvature of 8 m to 4 m in the region of the surface A as well as vertical radii of curvature in the range 15 m to 5 m and horizontal radii of curvature of 8 m to 3 m in the region of the surface B.

7. Pane according to claim 5 or 6, wherein the angle α (alpha) is -10° to 5°.

8. Pane according to one of claims 5 through 7, wherein the angle β (beta) is 5° to 20°.

9. Pane according to one of claims 5 through 8, wherein the pane height is 1250 mm to 1650 mm.

10. Motor vehicle glazing comprising at least one pane (1) with a pane height of 700 mm to 1100 mm, a roof top edge (1c), an A-pillar edge (1e), a vehicle body edge (1f) as well as two rectangular surfaces A and B, wherein the surface A has dimensions of 800 mm * 800 mm and the surface B has dimensions of 1000 mm * 700 mm, and surface A and surface B are centrally delimited by the lowest contact point (1a) of the pane (1) with the vehicle body edge (1f) horizontal to the floor, and the lowest contact point (1a) and the point of the roof top edge (1c) situated the shortest distance from the contact point (1a) form a Y0 axis, and the two points farthest apart based on the width of the pane (1) form a Z0 axis, wherein the pane (1)
a. has vertical radii of curvature of 18 m to 4 m and horizontal radii of curvature of 6 m to 1 m in the region of the surface A,
b. has vertical radii of curvature in the range from 18 m to 5 m and horizontal radii of curvature of 6 m to 0.8 m in the region of the surface B,
c. the curvature of the pane (1) along Y0 on the boundary with the roof top edge (1c) corresponds to a first tangent (1b), wherein the first tangent forms an angle α (alpha) of 15° to 50° with the roof surface (19),
d. the curvature of the pane (1) touching Z0 at the A-pillar edge (1e) corresponds to a second tangent (1d), wherein the second tangent forms an angle β (beta) of 28° to 90° with Z0.

11. Pane according to claim 10, wherein the pane (1) has vertical radii of curvature of 18 m to 5 m and horizontal radii of curvature of 6 m to 2 m in the region of the surface A as well as vertical radii of curvature in the range 18 m to 6 m and horizontal radii of curvature of 6 m to 1.5 m in the region of the surface B.

12. Pane according to claim 10 or 11, wherein the angle α (alpha) is 25° to 45°.

13. Pane according to one of claims 10 through 12, wherein the angle β (beta) is 45° to 70°.

14. Pane according to one of claims 10 through 13, wherein the pane height is 800 mm to 1000 mm.

15. Use of a pane according to one of claims 1 through 14 as a motor vehicle windshield, preferably as a motor vehicle windshield with head-up-display.

## Revendications

1. Vitrage pour véhicule comprenant au moins une vitre (1) avec une hauteur de vitre comprise entre 900 et 1650 mm, un bord supérieur de toiture (1c), un bord de pilier-A (1e), un bord de carrosserie (1f), ainsi que deux zones rectangulaires A et B, où la zone A présente une étendue de 800mm * 800 mm et la zone B présente une étendue de 1000 mm * 700 mm et la zone A et la zone B sont délimitées centralement horizontalement par rapport au sol par le point de contact (1a) le plus bas de la vitre (1) avec le bord de carrosserie (1f) et le point de contact (1a) le plus bas et le point du bord supérieur de toiture (1c) à la plus courte distance du point de contact (1a) forment un axe Y0 et les deux points les plus éloignés basés sur la largeur de l'axe de la vitre (1) forment un axe Z0 où la vitre (1) :
a. présente des rayons de courbure verticale de 10 m à 3 m et des rayons de courbure horizontale de 8 m à 2,0 m dans la région de la zone A,
b. présente des rayons de courbure verticaux dans la gamme de 10 m à 4 m et des rayons de courbure horizontale de 8 m à 1,0 m dans la région de la zone B,
c. la courbure de la vitre (1) le long de Y0 à la limite du bord supérieur de toiture (1c) représente une première tangente (1b), où la première tangente forme un angle α (alpha) de -10° à 15° par rapport à la surface de toiture (19),
d. la courbure de la vitre (1) en contact avec Z0 représente une deuxième tangente (1D) sur le bord de pilier-A (1e), où la deuxième tangente forme un angle β (bêta) de 28° à 70º par rapport à Z0.

2. Vitre selon la revendication 1, où l'angle α (alpha) se situe entre -5° et 10°.

3. Vitre selon l'une des revendications 1 à 2, où l'angle β (bêta) se situe entre 40° et 65 °.

4. Vitre selon l'une des revendications 1 à 3, où la hauteur de la vitre se situe entre 1000 mm à 1250 mm.

5. Vitrage pour véhicule comprenant au moins une vitre (1) avec une hauteur de vitre comprise entre 1100 mm et 1850 mm, un bord supérieur de toiture (1c), un bord de pilier-A (1e), un bord de carrosserie (1f), ainsi que deux zones rectangulaires A et B, où la zone A présente une étendue de 800mm * 800 mm et la zone B présente une étendue de 1000 mm * 700 mm et la zone A et la zone B sont délimitées centralement horizontalement par rapport au sol par le point de contact (1a) le plus bas de la vitre (1) avec le bord de carrosserie (1f) et le point de contact (1a) le plus bas et le point du bord supérieur de toiture (1c) à la plus courte distance du point de contact (1a) forment un axe Y0 et les deux points les plus éloignés basés sur la largeur de l'axe de la vitre (1) forment un axe Z0 où la vitre (1) :
a. présente des rayons de courbure verticale de 18 m à 3 m et des rayons de courbure horizontale de 10 m à 3 m dans la région de la zone A,
b. présente des rayons de courbure verticaux dans la gamme comprise entre 18 m et 4 m et des rayons de courbure horizontale de 10 m à 2 m dans la région de la zone B,
c. la courbure de la vitre (1) le long de Y0 à la limite du bord supérieur de toiture (1c) représente une première tangente (1b), où la première tangente forme un angle α (alpha) de -20° à 15 ° par rapport à la surface de toiture (19),
d. la courbure de la vitre (1) en contact avec Z0 représente une deuxième tangente (1D) sur le bord de pilier-A (1e), où la deuxième tangente forme un angle β (bêta) de 3° à 30º par rapport à Z0.

6. Vitre selon la revendication 5, où la vitre (1) présente des rayons de courbure verticale de 15 m et 4 m et des rayons de courbure horizontale de 8 m à 4 m dans la région de la zone A, et des rayons de courbure verticale de l'ordre de 15 m à 5 m et des rayons de courbure horizontale de 8 m à 3 m dans la région de la zone B.

7. Vitre selon la revendication 5 ou 6, où l'angle α (alpha) se situe entre -10° et 5°.

8. Vitre selon l'une des revendications du 5 à 7, où l'angle β (bêta) se situe entre 5° et 20°.

9. Vitre selon l'une des revendications 5 à 8, où la hauteur de la vitre se situe entre 1250 mm à 1650 mm.

10. Vitrage pour véhicule comprenant au moins une vitre (1) avec une hauteur de vitre comprise entre 700 mm et 1100 mm, un bord supérieur de toiture (1c), un bord de pilier-A (1e), un bord de carrosserie (1f), ainsi que deux zones rectangulaires A et B, où la zone A présente une étendue de 800mm * 800 mm et la zone B présente une étendue de 1000 mm * 700 mm et la zone A et la zone B sont délimitées centralement horizontalement par rapport au sol par le point de contact (1a) le plus bas de la vitre (1) avec le bord de carrosserie (1f) et le point de contact (1a) le plus bas et le point du bord supérieur de toiture (1c) à la plus courte distance du point de contact (1a) forment un axe Y0 et les deux points les plus éloignés basés sur la largeur de l'axe de la vitre (1) forment un axe Z0 où la vitre (1) :
a. présente des rayons de courbure verticale de 18 m à 4 m et des rayons de courbure horizontale de 6 m à 1 m dans la région de la zone A,
b. présente des rayons de courbure verticaux de 18 m à 5 m et des rayons de courbure horizontale de 6 m à 0.8 m dans la région de la zone B,
c. la courbure de la vitre (1) le long de Y0 à la limite du bord supérieur de toiture (1c) représente une première tangente (1 b), où la première tangente forme un angle α (alpha) de 15° à 50° par rapport à la surface de toiture (19),
d. la courbure de la vitre (1) en contact avec Z0 représente une deuxième tangente (1D) sur le bord de pilier-A (1e), où la deuxième tangente forme un angle β (bêta) de 28° à 90º par rapport à Z0.

11. Vitre selon la revendication 10, où la vitre (1) présente des rayons de courbure verticale de 18 m à 5 m et des rayons de courbure horizontale de 6 m à 2 m dans la zone A, ainsi que des rayons de courbure verticale dans la gamme comprise entre 18 m et 6 m et des rayons de courbure horizontale de de 6 m à 1,5 m dans la zone B.

12. Vitre selon la revendication 10 ou 11, dont l'angle α (alpha) se situe entre 25° et 45°.

13. Vitre selon l'une des revendications 10 et 12, où l'angle β (Beta) se situe entre 45° et 70°.

14. Vitre selon l'une des revendications du 10 au 13, où la hauteur de la vitre se situe entre 800 mm et 1000 mm.

15. Utilisation d'une vitre selon l'une des revendications 1 à 14, comme pare-brise de véhicule, de préférence comme pare-brise du véhicule avec un affichage tête haute.
